# EUROPÄISCHE PATENTANMELDUNG

(11) **EP 3 252 502 A1**
(43) Veröffentlichungstag der Anmeldung: **06.12.2017**
(21) Anmeldenummer: 17172358.8
(22) Anmeldetag: 23.05.2017
(51) Int. Cl.: G01S 15/93, G01S 17/02, G01S 17/93, G01S 15/02, G01S 13/86, G01S 13/93

(54) **VERFAHREN ZUM ERKENNEN EINER NEIGUNG IN EINER FAHRBAHN EINES KRAFTFAHRZEUGS, FAHRERASSISTENZSYSTEM SOWIE KRAFTFAHRZEUG**

(30) Priorität: 30.05.2016 DE 102016109850
(71) Anmelder: Valeo Schalter und Sensoren GmbH, 74321 Bietigheim-Bissingen (DE)
(72) Erfinder: Luca, Razvan, 74321 Bietigheim-Bissingen (DE)

(57) **Zusammenfassung**

Die Erfindung betrifft ein Verfahren zum Erkennen einer geneigten Lage eines ersten Fahrbahnbereiches (9) bezüglich eines an den ersten Fahrbahnbereich (9) angrenzenden zweiten Fahrbahnbereiches (10), auf welchem sich ein Kraftfahrzeug (1) befindet, wobei die geneigte Lage basierend auf einem von einer fahrzeugseitigen Abstandssensoreinrichtung (4) aus einem Umgebungsbereich (7) des Kraftfahrzeugs (1) erfassten Echosignal, durch welches der erste Fahrbahnbereich (9) charakterisiert wird, und basierend auf einem von einer fahrzeugseitigen Drehratensensoreinrichtung (8) erfassten Drehratensignal, durch welches der zweite Fahrbahnbereich (10) charakterisiert wird, erkannt wird. Die Erfindung betrifft außerdem ein Fahrerassistenzsystem (2) sowie ein Kraftfahrzeug (1).

## Beschreibung

Die Erfindung betrifft ein Verfahren zum Erkennen einer geneigten Lage eines ersten Fahrbahnbereiches bezüglich eines an dem ersten Fahrbahnbereich angrenzenden zweiten Fahrbahrbereiches, auf welchem sich ein Kraftfahrzeug befindet. Die Erfindung betrifft außerdem ein Fahrerassistenzsystem sowie ein Kraftfahrzeug.

Vorliegend richtet sich das Interesse insbesondere auf Fahrerassistenzsysteme für Kraftfahrzeuge, welche dazu dienen, einen Fahrer des Kraftfahrzeugs bei seiner Fahraufgabe zu unterstützen. Solche Fahrerassistenzsysteme weisen üblicherweise Sensoreinrichtungen, beispielsweise Abstandssensoreinrichtungen, auf, mit welchen ein Umgebungsbereich des Kraftfahrzeugs überwacht werden kann. Dabei können von den Abstandssensoreinrichtungen Objekte beziehungsweise Hindernisse in dem Umgebungsbereich des Kraftfahrzeugs erfasst werden sowie über eine Laufzeitmessung eines an den Objekten reflektierten Abstandssensorsignals eine Position beziehungsweise ein Abstand der Objekte relativ zum Kraftfahrzeug bestimmt werden.

Dazu werden üblicherweise Echos beziehungsweise Reflexionspunkte in einem von der Abstandssensoreinrichtung erfassten Echosignal erkannt, deren Echoamplituden bestimmt und all diejenigen Reflexionspunkte als von einer Reflexion des Abstandssensorsignals an einer Fahrbahnoberfläche stammende Bodenreflexionspunkte interpretiert, deren Echoamplituden einen vorbestimmten Schwellwert unterschreiten. Die Bodenreflexionspunkte werden also der Fahrbahnoberfläche des Kraftfahrzeugs zugeordnet und dementsprechend nicht als Hindernisse für das Kraftfahrzeug interpretiert. Diejenigen Reflexionspunkte, deren Echoamplituden den Schwellwert überschreiten, werden als von einer Reflexion des Abstandssensorsignals an einem Objekt stammende Objektreflexionspunkte interpretiert und damit einem Objekt zugeordnet. Wenn ein Objekt erfasst wurde, so kann beispielsweise durch das Fahrerassistenzsystem ein Warnsignal an einen Fahrer des Kraftfahrzeugs ausgegeben werden und/oder das Kraftfahrzeug automatisch abgebremst werden, um eine drohende Kollision des Kraftfahrzeugs mit dem Objekt zu vermeiden.

Bei der Objekterfassung wird üblicherweise davon ausgegangen, dass sich das Kraftfahrzeug auf einer ebenen Fahrbahn bewegt. Probleme ergeben sich jedoch beispielsweise dann, wenn ein Fahrbahnbereich der Fahrbahn gegenüber einem Fahrbahnbereich, auf welchem sich das Kraftfahrzeug befindet, geneigt ist. Ein solcher geneigter Fahrbahnbereich kann beispielsweise eine Rampe in einem Parkhaus oder in einer Garage für das Kraftfahrzeug sein. Hier kann es dann vorkommen, dass in Abhängigkeit von einem Neigungswinkel des geneigten Fahrbahnbereiches Bodenreflexionspunkte fälschlicherweise einem Objekt zugeordnet werden, da die Echoamplituden der Bodenreflexionspunkte den vorbestimmten Schwellwert überschreiten. Dies kann zu einer fehlerhaften Warnung des Fahrers und/oder einer fehlerhaften automatischen Bremsung des Kraftfahrzeugs führen, welche den Fahrer des Kraftfahrzeugs irritieren kann.

Dazu ist aus der DE 10 2011 118 171 A1 ein Verfahren zur kontinuierlichen Schätzung einer Fahrbahnebene eines Kraftfahrzeugs aus Bildsequenzen einer Bilderfassungseinrichtung bekannt. Dabei werden aktuelle 3D-Punkte eines Umfelds des Kraftfahrzeugs aus dem aktuellen Bild der Bildsequenz bestimmt. Dann erfolgt eine Vorselektion, bei welcher alle 3D-Punkte ausgewählt werden, welche zur Fahrbahnebene gehören könnten. Die Auswertung von Bildern, insbesondere die dreidimensionale Auswertung von Bildern, ist in der Regel sehr aufwendig. Außerdem muss das Kraftfahrzeug hierzu mit einer Bilderfassungseinrichtung, beispielsweise einer Kamera, ausgestattet sein.

Es ist Aufgabe der vorliegenden Erfindung, eine Lösung aufzuzeigen, wie auf besonders einfache, unaufwendige und zuverlässige Weise eine geneigte Lage zweier aneinander angrenzender Fahrbahnbereiche einer Fahrbahn für ein Kraftfahrzeug erkannt werden kann.

Diese Aufgabe wird erfindungsgemäß durch ein Verfahren, ein Fahrerassistenzsystem sowie ein Kraftfahrzeug mit den Merkmalen gemäß den jeweiligen unabhängigen Ansprüchen gelöst. Vorteilhafte Ausführungsformen der Erfindung sind Gegenstand der abhängigen Ansprüche, der Beschreibung und der Figuren.

Gemäß einer Ausführungsform des erfindungsgemäßen Verfahrens zum Erkennen einer geneigten Lage eines ersten Fahrbahnbereiches bezüglich eines an den ersten Fahrbahnbereich angrenzenden zweiten Fahrbahnbereiches, auf welchem sich ein Kraftfahrzeug befindet, wird die geneigte Lage insbesondere basierend auf einem von einer fahrzeugseitigen Abstandssensoreinrichtung aus einem Umgebungsbereich des Kraftfahrzeugs erfassten Echosignal, durch welches der erste Fahrbahnbereich charakterisiert wird, und basierend auf einem von einer fahrzeugseitigen Drehratensensoreinrichtung erfassten Drehratensignal, durch welches der zweite Fahrbahnbereich charakterisiert wird, erkannt.

Bevorzugt wird bei dem erfindungsgemäßen Verfahren zum Erkennen einer geneigten Lage eines ersten Fahrbahnbereiches bezüglich eines an den ersten Fahrbahnbereich angrenzenden zweiten Fahrbahnbereiches, auf welchem sich ein Kraftfahrzeug befindet, die geneigte Lage basierend auf einem von einer fahrzeugseitigen Abstandssensoreinrichtung aus einem Umgebungsbereich des Kraftfahrzeugs erfassten Echosignal, durch welches der erste Fahrbahnbereich charakterisiert wird, und basierend auf einem von einer fahrzeugseitigen Drehratensensoreinrichtung erfassten Drehratensignal, durch welches der zweite Fahrbahnbereich charakterisiert wird, erkannt.

Mittels des Verfahrens kann also überprüft werden, ob zwei aneinander angrenzende Fahrbahnbereiche zueinander geneigt angeordnet sind beziehungsweise unter Ausbildung eines Neigungswinkels aneinander angrenzen. Vorliegend sind dabei insbesondere Neigungswinkel von weniger als 180° von Interesse. In einem ersten Fall kann beispielsweise der zweite Fahrbahnbereich in einer Horizontalebene beziehungsweise Horizontale liegen, sodass sich das Kraftfahrzeug auf dem zweiten Fahrbahnbereich horizontal bewegt. Der erste Fahrbahnbereich ist angrenzend an den zweiten Bereich als eine schiefe Ebene, insbesondere mit einer positiven Steigung, ausgebildet. In einem zweiten Fall kann der zweite Fahrbahnbereich beispielsweise als eine schiefe Ebene mit einer insbesondere negativen Steigung ausgebildet sein, auf welcher sich das Kraftfahrzeug abwärts bewegt. Der erste Fahrbahnbereich kann hier in der Horizontalebene liegen. Informationen über die geneigte Lage können einem Fahrerassistenzsystem des Kraftfahrzeugs, beispielsweise einem automatischen Notbremsassistenten, bereitgestellt werden.

Insbesondere wird die geneigte Lage des in einer Fahrtrichtung des Kraftfahrzeugs vor dem Kraftfahrzeug liegenden ersten Fahrbahnbereiches erkannt, wobei eine Haupterfassungsrichtung der Abstandssensoreinrichtung entlang einer Fahrzeuglängsachse des Kraftfahrzeugs orientiert ist. Dies bedeutet, dass bei einer Vorwärtsfahrtrichtung des Kraftfahrzeugs der erste Fahrbahnbereich vor dem Kraftfahrzeug liegt und bei einer Rückwärtsfahrtrichtung des Kraftfahrzeugs der erste Fahrbahnbereich hinter dem Kraftfahrzeug liegt. Die Haupterfassungsrichtung der Abstandssensoreinrichtung, entlang welcher die Abstandssensoreinrichtung ein Sendesignal aussendet, ist entlang einer Fahrzeuglängsachse und damit entlang der Fahrtrichtung orientiert und auf einer Einbauhöhe der Abstandssensoreinrichtung am Kraftfahrzeug parallel zu dem zweiten Fahrbahnbereich orientiert. Durch die geneigte beziehungsweise schräge Lage der beiden Fahrbahnbereiche zueinander wird die Haupterfassungsrichtung der fahrzeugseitigen Abstandssensoreinrichtung in Richtung des ersten Fahrbahnbereiches orientiert. Anders ausgedrückt trifft die Haupterfassungsrichtung der Abstandssensoreinrichtung derart auf eine Oberfläche des ersten Fahrbahnbereiches auf, dass das von der Abstandssensoreinrichtung ausgesendete Sendesignal hauptsächlich an dem ersten Fahrbahnbereich reflektiert wird. Daraus folgt, dass die Abstandssensorseinrichtung hauptsächlich die Oberfläche des ersten Fahrbahnbereiches erfasst, welche aber kein Hindernis für das Kraftfahrzeug darstellt.

Um nun zu verhindern, dass von der Abstandssensoreinrichtung, welche beispielsweise für das Fahrerassistenzsystem den Umgebungsbereich des Kraftfahrzeugs überwacht, der bezüglich des zweiten Fahrbahnbereiches geneigte erste Fahrbahnbereich als Hindernis erfasst wird, wird anhand des Echosignals sowie anhand des Drehratensignals der Drehmomentsensoreinrichtung die geneigte Lage der Fahrbahnbereiche zueinander erkannt. Dabei kann vorgesehen sein, dass als das Echosignal ein Ultraschallsignal von der zumindest einen Ultraschallsensor aufweisenden Abstandssensoreinrichtung und/oder ein Radarsignal von der zumindest einen Radarsensor aufweisenden Abstandssensoreinrichtung und/oder ein Lasersignal von der zumindest einen LiDAR-Sensor aufweisenden Abstandssensoreinrichtung empfangen wird. Insbesondere wird als das Echosignal ein Ultraschallsignal von zumindest einem frontseitig und/oder heckseitig am Kraftfahrzeug angeordneten Ultraschallsensor zum Überwachen des Umgebungsbereiches vor und hinter dem Kraftfahrzeug empfangen. Durch Auswertung des Echosignals, welches bei Vorhandensein der geneigten Lage Reflexionspunkte von dem ersten Fahrbahnbereich, sogenannte Bodenreflexionspunkte umfasst, kann der erste Fahrbahnbereich charakterisiert werden, indem eine räumliche Lage des ersten Fahrbahnbereiches bestimmt wird.

Zur Erfassung des Drehratensignals wird die Drehratensensoreinrichtung bereitgestellt, welche dazu ausgelegt ist, eine Rotationsgeschwindigkeit des Kraftfahrzeugs beziehungsweise einen Neigungswinkel des Kraftfahrzeugs um eine jeweilige Fahrzeugachse zu erfassen. Beispielsweise kann die Drehratensensoreinrichtung eine Gierrate beziehungsweise einen Gierwinkel um eine Fahrzeughochachse, eine Rollrate beziehungsweise einen Rollwinkel um eine Fahrzeuglängsachse und eine Nickrate beziehungsweise einen Nickwinkel um eine Fahrzeugquerachse erfassen. Dazu kann die Drehratensensoreinrichtung beispielsweise in an sich bekannter Weise für jede Achse ein Gyroskop aufweisen, welches als ein mikroelektromechanisches System (MEMS) ausgebildet sein kann. Durch Auswertung des Drehratensignals kann der zweite Fahrbahnbereich charakterisiert werden, indem eine räumliche Lage des zweiten Fahrbahnbereiches bestimmt wird.

Die Kombination der Sensordaten der Abstandssensoreinrichtung und der Drehratensensoreinrichtung ist besonders vorteilhaft, da die meisten Kraftfahrzeuge ohnehin mit einer Drehratensensoreinrichtung, beispielsweise für ein elektronisches Stabilitätsprogramm (ESP) des Kraftfahrzeugs, und mit einer Abstandssensoreinrichtung, beispielsweise für ein Parkhilfesystem des Kraftfahrzeugs, ausgestattet sind. Diese Informationen werden hier zusätzlich dazu genutzt, zu erfassen, ob zwei aneinander angrenzende Fahrbahnbereiche zueinander geneigt sind. Das Verfahren ist somit besonders unaufwendig und einfach gestaltet.

Dabei kann vorgesehen sein, dass basierend auf dem Echosignal eine erste Lagebeziehung zwischen dem ersten Fahrbahnbereich und einer Bezugsebene, insbesondere einer Horizontalebene, erfasst wird, basierend auf dem Drehratensignal eine zweite Lagebeziehung zwischen dem zweiten Fahrbahnbereich und der Bezugsebene erfasst wird und die geneigte Lage erkannt wird, falls anhand der Lagebeziehungen erfasst wird, dass einer der beiden Fahrbahnbereiche in der Bezugsebene liegt und der jeweils andere Fahrbahnbereich schräg zu der Bezugsebene orientiert ist.

Mit anderen Worten bedeutet dies, dass in dem ersten Fall der zweite Fahrbahnbereich als in der Bezugsebene, also beispielsweise in der Horizontalen liegend, erfasst wird, falls von dem Drehratensensor für zumindest eine vorbestimmte Fahrzeugachse keine Neigungsinformation, beispielsweise ein Neigungswinkel von in etwa 0°, erfasst wird. Das für eine jeweilige Fahrzeugachse bestimmte Drehratensignal kann nämlich als ein direktes Maß für die Verkippung beziehungsweise Neigung des zweiten Fahrbahnbereiches bezüglich der Bezugsebene entlang dieser Fahrtrichtung verwendet werden. Der erste Fahrbahnbereich wird als bezüglich der Horizontalen geneigt erkannt, falls anhand des Echosignals eine Neigungsinformation entlang der vorbestimmten Fahrzeugachse erfasst wird. In dem zweiten Fall wird der zweite Fahrbahnbereich als gegenüber der Horizontalen geneigt erkannt, falls die Drehratensensoreinrichtung für die zumindest eine Fahrzeugachse eine Neigungsinformation erfasst, beispielsweise der betrachtete Neigungswinkel 0°überschreitet. Der erste Fahrbahnbereich wird als in der Horizontalebene liegend erkannt, falls anhand der ersten Sensordaten keine Neigungsinformation erfasst wird.

Gemäß einer Ausführungsform der Erfindung wird dabei zunächst bestimmt, ob sich in dem von der Abstandssensoreinrichtung empfangenen Echosignal Bodenreflexionspunkte befinden, welche von einer Reflexion aus dem ersten Fahrbahnbereich stammen, und falls ja, wird die erste Lagebeziehung anhand der Bodenreflexionspunkte bestimmt, und die zweite Lagebeziehung anhand eines von der Drehmomentsensoreinrichtung erfassten Neigungswinkels, insbesondere eines Nickwinkels, des Kraftfahrzeugs bestimmt.

Zum Erfassen der Bodenreflexionspunkte, also zum Identifizieren derjenigen Reflexionspunkte in dem Echosignal, welche von der Reflexion des Sendesignals an dem ersten Fahrbahnbereich stammen, kann beispielsweise überprüft werden, ob die Reflexionspunkte in dem Echosignal ein bestimmtes Muster aufweisen beziehungsweise in einem bestimmten Muster angeordnet sind. Ein solches Muster kann beispielsweise dergestalt sein, dass Koordinaten, welche eine Position der Reflexionspunkten in dem Umgebungsbereich beschreiben, in einer gemeinsamen Ebene liegen oder höchstens um einen vorbestimmten Schwellwert von der gemeinsamen Ebene abweichen. Falls beispielsweise Reflexionspunkte, welche insbesondere einem zusammenhängenden Abstandsbereich mit einer vorbestimmten Mindestgröße zugeordnet sind, in einer gemeinsamen Ebene angeordnet sind, werden diese Reflexionspunkte als Bodenreflexionspunkte klassifiziert. Anhand der Bodenreflexionspunkte kann dann die erste Lagebeziehung bestimmt werden, beispielsweise durch Bestimmen einer Steigung der gemeinsamen Ebene der Bodenreflexionspunkte. Dazu wird beispielsweise die erste Lagebeziehung in Abhängigkeit von zumindest einer Koordinate der Bodenreflexionspunkte, insbesondere eine einen Abstand der Bodenreflexionspunkte zu der Bezugsebene beschreibenden Höhenkoordinate, bestimmt. Bei der Bestimmung der ersten Lagebeziehung wird insbesondere die Einbauhöhe der Abstandssensoreinrichtung am Kraftfahrzeug berücksichtigt. Wenn beispielsweise erfasst wird, dass die in einer gemeinsamen Ebene liegenden Bodenreflexionspunkte jeweils in etwa die gleiche Höhe beziehungsweise den gleichen Wert der Höhenkoordinate aufweisen, so wird davon ausgegangen, dass die Ebene horizontal ist. Wenn die Höhenkoordinaten der in einer Ebene liegenden Bodenreflexionspunkte mit steigendem Abstand der Bodenreflexionspunkte relativ zum Kraftfahrzeug steigende Werte aufweisen, so wird erkannt, dass die Bodenreflexionspunkte in einer schiefen Ebene liegen.

Es erweist sich als vorteilhaft, wenn der erste Fahrbahnbereich zusätzlich zu dem Echosignal anhand von Kameradaten zumindest einer fahrzeugseitigen Kamera und/oder einer Bedieneingaben eines Fahrers des Kraftfahrzeugs und/oder GPS-Daten charakterisiert wird. Dies bedeutet, dass zum Bestimmen der ersten Lagebeziehung das Echosignal mit Kameradaten und/oder Bedieneingabedaten und/oder GPS-Daten fusioniert wird. Beispielsweise kann anhand der GPS-Daten in Kombination mit einer Umfeldkarte des Kraftfahrzeugs, welche beispielsweise von einem Navigationssystem des Kraftfahrzeugs bereitgestellt wird, erkannt werden, wie die aktuelle Fahrbahn des Kraftfahrzeugs geneigt ist. Auch kann der Fahrer beispielsweise eine Bedieneingabe tätigen, durch welche erkannt wird, dass sich das Kraftfahrzeug beispielsweise auf einer geneigten Fahrbahn befindet. Ebenso können anhand von Kameradaten beziehungsweise Bildern dreidimensionale Informationen über den Umgebungsbereich ermittelt werden. Durch die Sensordatenfusion ist das Verfahren besonders zuverlässig gestaltet, da eine Wahrscheinlichkeit dafür, dass die Reflexionspunkte anhand der Mustererkennung fälschlicherweise als Bodenreflexionspunkte interpretiert werden, reduziert wird.

Besonders bevorzugt wird bei Erkennung der geneigten Lage zumindest ein Schwellwert einer abstandswertabhängigen Schwellwertkurve der Abstandssensoreinrichtung, mit welcher Amplituden von Reflexionspunkten in dem von der Abstandssensoreinrichtung zur Erfassung von Objekten in dem Umgebungsbereich empfangenen Echosignal verglichen werden, zum Verringern einer Empfindlichkeit der Abstandssensoreinrichtung erhöht. Die Schwellwertkurve dient zum Einstellen der Empfindlichkeit der Abstandssensoreinrichtung, wobei die Schwellwerte über jeweilige Abstandswerte relativ zum Kraftfahrzeug aufgetragen sind. Dabei weist die Abstandssensoreinrichtung üblicherweise eine abstandswertabhängige Empfindlichkeit auf. Anhand einer Laufzeit eines jeweiligen Echos beziehungsweise Reflexionspunktes in dem Echosignal kann der jeweilige Abstandswert bestimmt werden, aus welchem das Echo empfangen wurde. Die Amplitude dieses Echos wird dann mit dem zugehörigen Schwellwert verglichen. Wenn die Amplitude den zugehörigen Schwellwert überschreitet, wird der Reflexionspunkt als Objektreflexionspunkt identifiziert und daraufhin ein Objekt erkannt. Wenn die Amplitude den Schwellwert unterschreitet, so wird der Reflexionspunkt als Bodenreflexionspunkt erkannt und verworfen. Beispielsweise erfolgt keine Warnausgabe beziehungsweise automatische Abbremsung des Kraftfahrzeugs bei Erkennung des Bodenreflexionspunktes. Wenn die geneigte Lage der Bereiche zueinander erkannt wird, so wird die Schwellwertkurve zumindest bereichsweise angehoben, also der zumindest eine Schwellwert erhöht. Der Erfindung liegt hierbei die Erkenntnis zugrunde, dass durch die geneigte Lage die Haupterfassungsrichtung der Abstandssensoreinrichtung in Richtung der Oberfläche des ersten Fahrbahnbereiches orientiert ist, und somit die aus dieser Haupterfassungsrichtung empfangenen Echos höhere Amplituden aufweisen und damit den Schwellwert überschreiten können. Um nun zu verhindern, dass diese Bodenreflexionspunkte fälschlicherweise als Objektreflexionspunkte interpretiert werden, also dass die Abstandssensoreinrichtung einen sogenannten Falschalarm erzeugt, wird die Schwellwertkurve angehoben. Somit können in einem bestimmungsgemäßen Messzyklus des Abstandssensoreinrichtung Objekte zuverlässig von der Fahrbahnoberfläche erfasst werden und damit ein zuverlässiger Betrieb des Fahrerassistenzsystems bereitgestellt werden.

Vorzugsweise wird dabei ein sich entlang einer Haupterfassungsrichtung erstreckender Abstandsbereich relativ zum Kraftfahrzeug bestimmt, für welchen die zu dem Abstandsbereich korrespondierenden Schwellwerte der abstandsabhängigen Schwellwertkurve erhöht werden. Der Abstandsbereich wird insbesondere in Abhängigkeit von einer Einbauhöhe der Abstandssensoreinrichtung im Kraftfahrzeug bestimmt. Auch kann die Haupterfassungsrichtung der Abstandssensoreinrichtung berücksichtigt werden. Wenn beispielsweise das Kraftfahrzeug auf der Horizontalen fährt und der erste Fahrbahnbereich eine positive Steigung aufweist, so werden insbesondere Reflexionspunkte bis zu der Einbauhöhe der Abstandssensoreinrichtung berücksichtigt.

In einer vorteilhaften Weiterbildung der Erfindung wird bei Erkennen der geneigten Lage zumindest eine Information über die geneigte Lage in eine einen Umgebungsbereich des Kraftfahrzeugs beschreibende Umgebungskarte eingetragen. Mittels der Abstandssensoreinrichtung kann nämlich die Umgebungskarte erstellt werden, welche beispielsweise für ein sogenanntes SLAM-Verfahren ("Simultaneous Localization and Mapping") verwendet werden kann. Bei dem SLAM-Verfahren wird gleichzeitig die Umgebungskarte bestimmt sowie die Position des Kraftfahrzeugs in der Umgebungskarte geschätzt. Um nun eine besonders genaue Umgebungskarte bereitzustellen, können zusätzlich die Bodenreflexionspunkte in die Umgebungskarte eingetragen werden und mit einem Attribut versehen werden, wobei das Attribut die Information über die geneigte Lage enthält. Die Umgebungskarte kann dabei in globalen Koordinaten, beispielsweise in GPS-Koordinaten, und/oder in lokalen Koordinaten beispielsweise in Fahrzeugkoordinaten, bestimmt werden. Mittels des Verfahrens ergibt sich also der Vorteil, dass eine Anzahl an Falschalarmen der Abstandssensoreinrichtung verringert werden kann. Mittels der Umgebungskarte können nämlich von der Abstandssensoreinrichtung erfasste Reflexionspunkte hinsichtlich der in der Umgebungskarte hinterlegten Informationen zuverlässig ausgewertet werden.

Die Erfindung betrifft außerdem ein Fahrerassistenzsystem für ein Kraftfahrzeug mit einer Abstandssensoreinrichtung, einer Drehratensensoreinrichtung und einer Steuereinrichtung, welche dazu ausgelegt ist, ein erfindungsgemäßes Verfahren durchzuführen. Insbesondere umfasst die Abstandssensoreinrichtung zumindest einen Ultraschallsensor und/oder zumindest einen Radarsensor und/oder zumindest einen LiDAR-Sensor, beispielsweise einen Laserscanner. Das Fahrerassistenzsystem kann beispielsweise dazu ausgelegt sein, das Kraftfahrzeug bei einer drohenden Kollision mit einem Hindernis automatisch abzubremsen und/oder ein Warnsignal für einen Fahrer des Kraftfahrzeugs zu erzeugen. Dazu kann das Fahrerassistenzsystem zunächst erfassen, ob die beiden Fahrbahnbereiche zueinander geneigt sind. Somit kann verhindert werden, dass Bodenreflexionspunkte fälschlicherweise einem Objekt zugeordnet werden und Objektpunkte fälschlicherweise als Bodenreflexionspunkte identifiziert werden.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "vor", "hinter", "horizontal", "Vorwärtsrichtung", "Rückwärtsrichtung", "Fahrtrichtung", "Fahrzeuglängsachse" (L), "Fahrzeugquerachse" (Q), "Fahrzeughochachse" (H), "Nickwinkel" (N), "Gierwinkel" (G), "Rollwinkel" (R), etc. sind bei einem vor dem Kraftfahrzeug stehenden und in Richtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs;
- Fig. 2: eine schematische Darstellung des Kraftfahrzeugs auf einer Fahrbahn mit zwei Fahrbahnbereichen, welche eine erste Lagebeziehung zueinander aufweisen; und
- Fig. 3: eine schematische Darstellung des Kraftfahrzeugs auf einer Fahrbahn mit zwei Fahrbahnbereichen, welche eine zweite Lagebeziehung zueinander aufweisen

In den Figuren sind gleiche sowie funktionsgleiche Elemente mit den gleichen Bezugszeichen versehen.

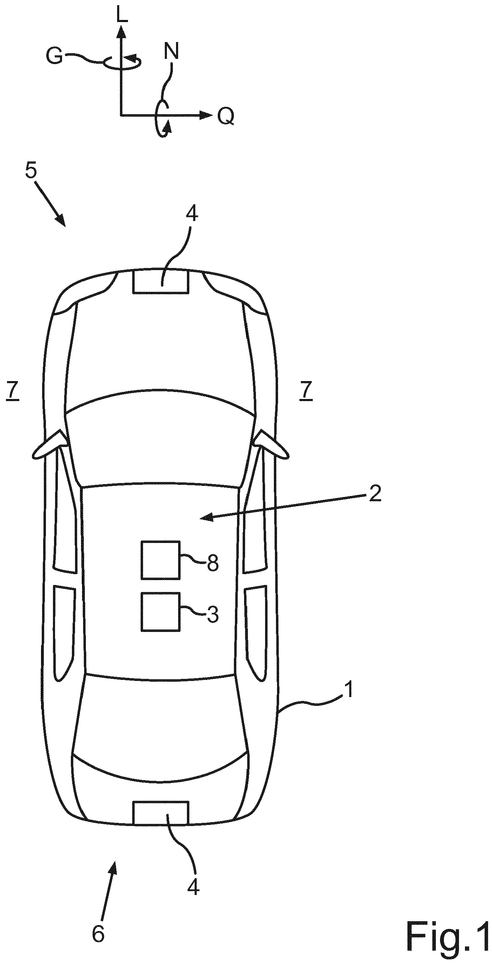

Fig. 1 zeigt ein Kraftfahrzeug 1 gemäß einer Ausführungsform der vorliegenden Erfindung in einer Draufsicht. Das Kraftfahrzeug 1 ist im vorliegenden Fall als ein Personenkraftwagen ausgebildet. Das Kraftfahrzeug 1 umfasst ein Fahrerassistenzsystem 2, welches einen Fahrer des Kraftfahrzeugs 1 beim Führen des Kraftfahrzeugs 1 unterstützen kann. Das Fahrerassistenzsystem 2 umfasst eine Steuereinrichtung 3, welche beispielsweise durch ein fahrzeugseitiges Steuergerät ausgebildet sein kann. Darüber hinaus umfasst das Fahrerassistenzsystem 2 eine Abstandssensoreinrichtung 4, welche insbesondere jeweils zumindest einen Ultraschallsensor aufweist. Alternativ oder zusätzlich kann die Erfassungseinrichtung 4 zumindest einen Radarsensor und/oder zumindest einen LiDAR-Sensor, beispielsweise einen Laserscanner, aufweisen.

In dem vorliegenden Ausführungsbeispiel umfasst das Fahrerassistenzsystem 2 eine erste Abstandssensoreinrichtung 4 in einem Frontbereich 5 des Kraftfahrzeugs 1 und eine zweite Abstandssensoreinrichtung 4 in einem Heckbereich 6 des Kraftfahrzeugs 1. Haupterfassungsrichtungen 12 der Abstandssensoreinrichtungen 4 sind hier nach vorne und nach hinten entlang einer Fahrzeuglängsachse L des Kraftfahrzeugs 1 orientiert. Die Abstandssensoreinrichtungen 4 können Objekte in einem Umgebungsbereich 7 des Kraftfahrzeugs 1 erfassen sowie deren Positionen relativ zum Kraftfahrzeug 1 mittels eines Laufzeitmessverfahrens bestimmen. Dazu können die Abstandssensoreinrichtungen 4 ein Sendesignal entlang ihrer Haupterfassungsrichtung 12 aussenden und das in dem Umgebungsbereich 7 reflektierte Sendesignal als Echosignal wieder empfangen. Anhand von Echos beziehungsweise Reflexionspunkten in dem Echosignal können dann die Objekte detektiert werden. Insbesondere werden diejenigen Echos Objekten zugeordnet, deren Amplituden einen vorbestimmten Schwellwert überschreiten. Nach Erfassung von solchen Objekten, welche ein Hindernis für das Kraftfahrzeug 1 darstellen, kann das Fahrerassistenzsystem 2 das Kraftfahrzeug 1 beispielsweise automatisch abbremsen, um eine Kollision des Kraftfahrzeugs 1 mit diesen Hindernissen zu vermeiden, und/oder ein Warnsignal für den Fahrer des Kraftfahrzeugs 1 generieren.

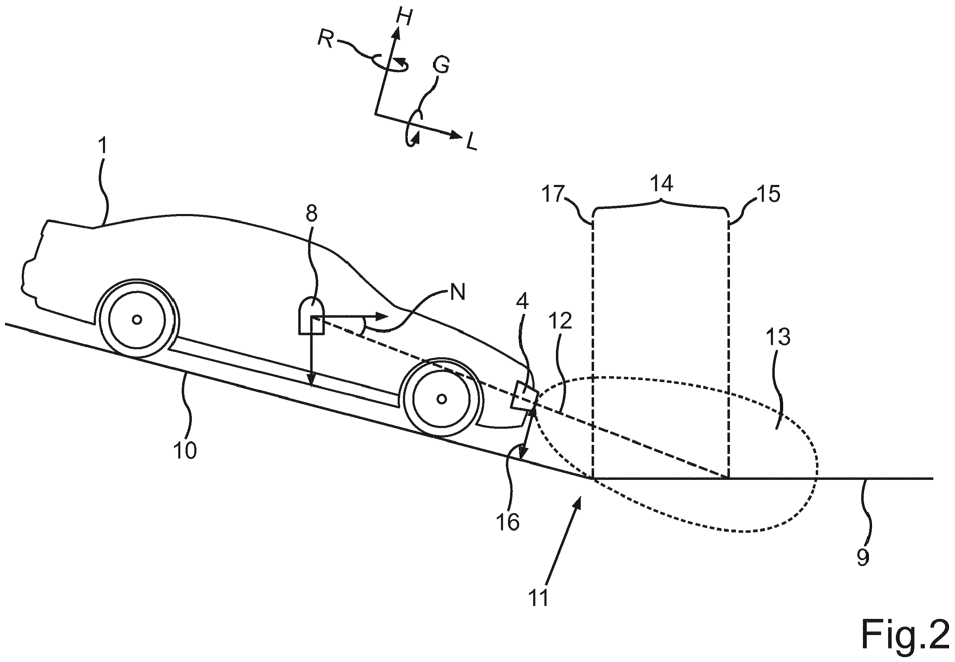

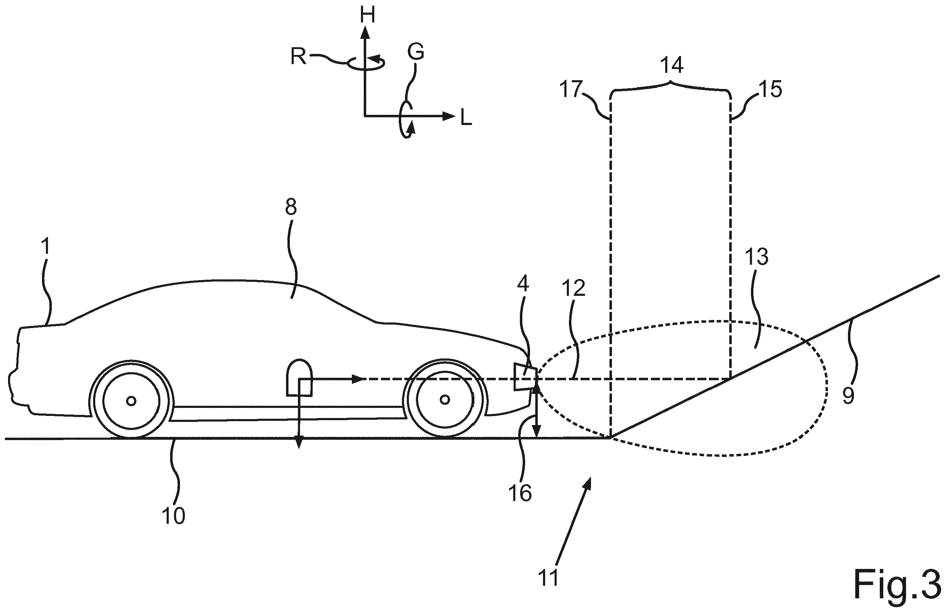

Außerdem weist das Fahrerassistenzsystem 2 eine Drehratensensoreinrichtung 8 auf, welche dazu ausgelegt ist, Drehratensignale zu erfassen. Beispielsweise kann die Drehratensensoreinrichtung 8 Neigungswinkel G, N, R um Fahrzeugachsen L, Q, H bestimmen. Dazu kann die Drehratensensoreinrichtung 8 beispielsweise für jede Fahrzeugachse L, Q, H ein Gyroskop aufweisen, mittels welchen sie die entsprechenden Neigungswinkel G, N, R bestimmen kann. So kann die Drehratensensoreinrichtung 8 beispielsweise einen Gierwinkel G um eine Fahrzeuglängsachse L, einen Nickwinkel N um eine Fahrzeugquerachse Q sowie einen Rollwinkel R um eine Fahrzeughochachse H erfassen. Mittels der von der Drehratensensoreinrichtung 8 sowie der Abstandssensoreinrichtung 4 erfassten Sensorsignale kann nun eine geneigte Lage zweier aneinander angrenzender Fahrbahnbereiche 9, 10 (siehe Fig. 2 und 3) einer Fahrbahn 11 für das Kraftfahrzeug 1 erfasst werden. Insbesondere soll eine geneigte Lage eines ersten Fahrbahnbereiches 9 erfasst, welcher entlang einer Fahrtrichtung des Kraftfahrzeugs 1 vor dem Kraftfahrzeug 1 und angrenzend an einen zweiten Fahrbahnbereich 10 angeordnet ist, wobei sich das Kraftfahrzeug 1 auf dem zweiten Fahrbahnbereich 10 befindet.

In Fig. 2 ist gezeigt, dass sich das Kraftfahrzeug 1 auf einem zweiten Fahrbahnbereich 10 befindet, welcher gegenüber einer Horizontalen geneigt ist. Der zweite Fahrbahnbereich 10 weist hier eine negative Steigung auf, sodass sich das Kraftfahrzeug 1 in Vorwärtsfahrtrichtung abwärts bewegt. Die entlang der Fahrzeuglängsachse L orientierte Haupterfassungsrichtung 12 der Abstandssensoreinrichtung 4 ist parallel zu dem zweiten Fahrbahnbereich 10 und damit schräg nach unten orientiert. Der erste Fahrbahnbereich 9 befindet sich in der Horizontalen. Dadurch trifft die schräg nach unten gerichtete Haupterfassungsrichtung 12 der Abstandssensoreinrichtung 4 auf eine Oberfläche des ersten Fahrbahnbereiches 9 auf, sodass sich in einem Erfassungsbereich 13 der Abstandssensoreinrichtung 4 hauptsächlich die Oberfläche des ersten Fahrbahnbereiches 9 befindet. Daraus folgt, dass die Reflexionspunkte in dem Echosignal hauptsächlich von der Reflexion des entlang der Haupterfassungsrichtung 12 ausgesendeten Sendesignals der Abstandssensoreinrichtung 4 an dem ersten Fahrbahnbereich 9 stammen und damit Bodenreflexionspunkte sind. Diese Bodenreflexionspunkte, welche aus der Haupterfassungsrichtung 12 erfasst wurden, weisen üblicherweise hohe Amplituden in dem Echosignal auf und würden unter der Annahme eines horizontalen ersten Fahrbahnbereiches 9 fälschlicherweise als Objekte detektiert werden.

Zur Erkennung der geneigten Lage werden die Reflexionspunkte nach dem Empfangen des Echosignals zunächst charakterisiert, um das Vorhandensein von Bodenreflexionspunkten zu erkennen. Dazu kann beispielsweise überprüft werden, ob die Reflexionspunkte in einem Koordinatensystem, beispielsweise dem Fahrzeugkoordinatensystem L, Q, H, ein bestimmtes Muster aufweisen. Wenn die Reflexionspunkte beispielsweise näherungsweise in einer Ebene liegen, werden diese als Bodenreflexionspunkte erkannt. Diese Ebene aus Bodenreflexionspunkten charakterisiert den ersten Fahrbahnbereich 9. Anhand der Lage der Ebene in dem Koordinatensystem kann nämlich eine Lagebeziehung zwischen dem ersten Fahrbahnbereich 9 und einer Bezugsebene, beispielsweise der Horizontale, bestimmt werden. Gemäß dem Ausführungsbeispiel von Fig. 2 wird sich eine Vielzahl der Reflexionspunkte in dem Echosignal in dem Koordinatensystem in einer horizontalen Ebene befinden. Dazu kann beispielsweise betrachtet werden, ob die in einer von der Fahrzeuglängsachse L und der Fahrzeugquerachse Q aufgespannten Ebene liegenden Reflexionspunkte die gleichen Werte von Höhenkoordinaten entlang der Fahrzeughochachse H aufweisen.

Außerdem wird von der Drehratensensoreinrichtung 8 zur Charakterisierung des zweiten Fahrbahnbereiches 10 ein Neigungswinkel des Kraftfahrzeugs 1, insbesondere der Nickwinkel N des Kraftfahrzeugs 1, bestimmt. Dieser gibt die Verkippung der Fahrzeuglängsachse L gegenüber der Horizontalen an und ist ein Indiz für die Neigung des zweiten Fahrbahnbereiches 10 zur Horizontalen. Gleichzeitig gibt der Nickwinkel N damit eine Verkippung beziehungsweise Neigung der Haupterfassungsrichtung 12 gegenüber der Horizontalen an. Gemäß Fig. 2 erfasst die Drehratensensoreinrichtung 8 einen von 0 Grad verschiedenen Nickwinkel N. Da anhand des Echosignals die Lage des ersten Fahrbahnbereiches 9 in der Horizontalen und anhand des Nickwinkels N die schräge Lage des zweiten Fahrbahnbereiches 10 zu der Horizontalen erkannt wurde, wird somit die geneigte Lage der beiden Fahrbahnbereiche 9, 10 zueinander erkannt.

In Fig. 3 ist gezeigt, dass sich das Kraftfahrzeug 1 auf dem sich in der Horizontalen befindlichen zweiten Fahrbahnbereich 10 befindet. Die Drehratensensoreinrichtung 8 erfasst somit einen Nickwinkel N, welcher in etwa 0 Grad entspricht. Das Echosignal weist hier Reflexionspunkte auf, deren Koordinaten in einer schiefen Ebene in dem Koordinatensystem liegen und welche somit als Bodenreflexionspunkte erkannt werden. Dabei weisen insbesondere Höhenkoordinaten der Reflexionspunkte mit steigendem Abstand zum Kraftfahrzeug 1 steigende Werte auf, sodass eine positive Steigung der Ebene und damit eine positive Steigung des ersten Fahrbahnbereiches 9 erkannt werden kann. Da anhand des Nickwinkels N die Lage des ersten Fahrbahnbereiches 9 in der Horizontalen und anhand des Echosignals die schräge Lage des zweiten Fahrbahnbereiches 10 zu der Horizontalen erkannt wurde, wird somit die geneigte Lage der beiden Fahrbahnbereiche 9, 10 zueinander erkannt.

Nach Erkennen der geneigten Lage der Fahrbahnbereiche 9, 10 kann eine Empfindlichkeit der Abstandssensoreinrichtung 4 eingestellt werden. Durch das Einstellen der Empfindlichkeit soll nämlich verhindert werden, dass im weiteren Messverlauf der Abstandssensoreinrichtung 4, beispielsweise zur Erfassung von Hindernissen für ein als Notbremsassistent ausgebildetes Fahrerassistenzsystem 2, die Bodenreflexionspunkte fälschlicherweise einem Hindernis zugeordnet werden. Dazu kann zunächst ein sich entlang der Fahrzeuglängsachse L erstreckender Abstandsbereich 14 bestimmt werden, innerhalb welchem die Empfindlichkeit der Abstandssensoreinrichtung 4 angepasst wird. Die Empfindlichkeit der Abstandssensoreinrichtung 4 wird beispielsweise durch eine sogenannte Schwellwertkurve eingestellt, bei welcher jeweiligen Abstandswerten relativ zum Kraftfahrzeug 1 Schwellwerte zugeordnet sind. Eine Amplitude eines Echos beziehungsweise Reflexionspunktes in dem Echosignal wird mit demjenigen Schwellwert verglichen, welcher zu einem anhand einer Laufzeit des Echos bestimmten Abstandswert korrespondiert. Bei Überschreitung des Schwellwertes wird dann der Reflexionspunkt als Objektreflexionspunkt erkannt und einem Objekt zugeordnet und bei Unterschreitung des Schwellwertes als Bodenreflexionspunkt erkannt und der Oberfläche der Fahrbahn zugeordnet. Diese Schwellwerte in dem Abstandsbereich 14 werden angehoben, sodass die Abstandssensoreinrichtung 4 für Echos aus diesem Abstandsbereich 14 eine geringere Empfindlichkeit aufweist und somit mit einer geringeren Wahrscheinlichkeit Bodenreflexionspunkte detektiert. Ein Maximalwert 15 des Abstandsbereichs 14 wird beispielsweise anhand von einer Einbauhöhe 16 der Abstandssensoreinrichtung 4 am Kraftfahrzeug 1 sowie der Haupterfassungsrichtung 12 bestimmt. Somit soll die Empfindlichkeit der Abstandssensoreinrichtung 4 für denjenigen Abstandsbereich 14 verringert werden, welcher die Haupterfassungsrichtung 12 der Abstandssensoreinrichtung 4 umfasst. Ein Minimalwert 17 des Abstandsbereiches 14 kann beispielsweise einen vorbestimmten Wert aufweisen. Gemäß Fig. 3 wird der Maximalwert 15 beispielsweise so festgelegt, dass Abstandswerte bis zur Einbauhöhe 16 der Abstandssensoreinrichtung 4 berücksichtigt werden.

Darüber hinaus kann vorgesehen sein, dass zumindest eine Information über die geneigte Lage der Fahrbahnbereiche 9, 10 zueinander in eine den Umgebungsbereich 7 des Kraftfahrzeugs 1 beschreibende Umgebungskarte eingetragen wird. Dazu können beispielsweise die Bodenreflexionspunkte des schrägen ersten Fahrbahnbereiches 9 gemäß Fig. 3 in die Umgebungskarte eingetragen werden und mit einem Attribut versehen werden, welches den jeweiligen Bodenreflexionspunkt als zu dem ersten Fahrbahnbereich 9 gehörig kennzeichnet. Durch das Eintragen der Information in die Umgebungskarte kann ebenfalls verhindert werden, dass Bodenreflexionspunkte fälschlicherweise als Objektreflexionspunkte erkannt werden und ein unnötiger Eingriff des Fahrerassistenzsystems 2, beispielsweise ein unnötiges Abbremsen des Kraftfahrzeugs 1 vor dem Befahren des ersten Fahrbahnbereiches 9, erfolgt. Anhand von der Umgebungskarte kann jede Information separat betrachtet werden, sodass für jeden Reflexionspunkt über einen Umgang mit diesem entschieden werden kann.

## Patentansprüche

1. Verfahren zum Erkennen einer geneigten Lage eines ersten Fahrbahnbereiches (9) bezüglich eines an den ersten Fahrbahnbereich (9) angrenzenden zweiten Fahrbahnbereiches (10), auf welchem sich ein Kraftfahrzeug (1) befindet, wobei die geneigte Lage basierend auf einem von einer fahrzeugseitigen Abstandssensoreinrichtung (4) aus einem Umgebungsbereich (7) des Kraftfahrzeugs (1) erfassten Echosignal, durch welches der erste Fahrbahnbereich (9) charakterisiert wird, und basierend auf einem von einer fahrzeugseitigen Drehratensensoreinrichtung (8) erfassten Drehratensignal, durch welches der zweite Fahrbahnbereich (10) charakterisiert wird, erkannt wird.

2. Verfahren nach Anspruch 1,
**dadurch gekennzeichnet, dass**
basierend auf dem Echosignal eine erste Lagebeziehung zwischen dem ersten Fahrbahnbereich (9) und einer Bezugsebene erfasst wird, basierend auf dem Drehratensignal eine zweite Lagebeziehung zwischen dem zweiten Fahrbahnbereich (10) und der Bezugsebene erfasst wird und die geneigte Lage erkannt wird, falls anhand der Lagebeziehungen erfasst wird, dass einer der beiden Fahrbahnbereiche (9, 10) in der Bezugsebene liegt und der jeweils andere Fahrbahnbereich (9, 10) schräg zu der Bezugsebene orientiert ist.

3. Verfahren nach Anspruch 2,
**dadurch gekennzeichnet, dass**
bestimmt wird, ob sich in dem von der Abstandssensoreinrichtung (4) empfangenen Echosignal Bodenreflexionspunkte befinden, welche von einer Reflexion aus dem ersten Fahrbahnbereich (9) stammen, und falls ja, die erste Lagebeziehung anhand der Bodenreflexionspunkte bestimmt wird, und die zweite Lagebeziehung anhand eines von der Drehmomentsensoreinrichtung (8) erfassten Neigungswinkels, insbesondere Nickwinkels (N), des Kraftfahrzeugs (1) bestimmt wird.

4. Verfahren nach Anspruch 3,
**dadurch gekennzeichnet, dass**
die erste Lagebeziehung in Abhängigkeit von zumindest einer Koordinate der Bodenreflexionspunkte, insbesondere einer einen Abstand der Bodenreflexionspunkte zu der Bezugsebene beschreibenden Höhenkoordinate, bestimmt wird.

5. Verfahren nach einem der vorhergehenden Ansprüche,
**dadurch gekennzeichnet, dass**
als das Echosignal ein Ultraschallsignal von der zumindest einen Ultraschallsensor aufweisenden Abstandssensoreinrichtung (4) und/oder ein Radarsignal von der zumindest einen Radarsensor aufweisenden Abstandssensoreinrichtung (4) und/oder ein Lasersignal von der zumindest einen LiDAR-Sensor aufweisenden Abstandssensoreinrichtung (4) empfangen wird.

6. Verfahren nach einem der vorhergehenden Ansprüche,
**dadurch gekennzeichnet, dass**
der erste Fahrbahnbereich (9) zusätzlich zu dem Echosignal anhand von Kameradaten zumindest einer fahrzeugseitigen Kamera und/oder einer Bedieneingaben eines Fahrers des Kraftfahrzeugs (1) und/oder GPS-Daten charakterisiert wird.

7. Verfahren nach einem der vorhergehenden Ansprüche,
**dadurch gekennzeichnet, dass**
bei Erkennung der geneigten Lage zumindest ein Schwellwert einer abstandswertabhängigen Schwellwertkurve der Abstandssensoreinrichtung (4), mit welcher Amplituden von Reflexionspunkten in dem von der Abstandssensoreinrichtung (4) zur Erfassung von Objekten in dem Umgebungsbereich (7) empfangenen Echosignal verglichen werden, zum Verringern einer Empfindlichkeit der Abstandssensoreinrichtung (4) erhöht wird.

8. Verfahren nach Anspruch 7,
**dadurch gekennzeichnet, dass**
ein sich entlang einer Haupterfassungsrichtung (12) der Abstandssensoreinrichtung (4) erstreckender Abstandsbereich (14) relativ zum Kraftfahrzeug (1) bestimmt wird, für welchen die zu dem Abstandsbereich (14) korrespondieren Schwellwerte der abstandswertabhängigen Schwellwertkurve erhöht werden.

9. Verfahren nach Anspruch 8,
**dadurch gekennzeichnet, dass**
der Abstandsbereich (14) in Abhängigkeit von einer Einbauhöhe (16) der Abstandssensoreinrichtung (4) am Kraftfahrzeug (1) bestimmt wird.

10. Verfahren nach einem der vorbestimmten Ansprüche,
**dadurch gekennzeichnet, dass**
bei Erkennen der geneigten Lage zumindest eine Information über die geneigte Lage in eine den Umgebungsbereich (7) des Kraftfahrzeugs (1) beschreibende Umgebungskarte eingetragen wird.

11. Verfahren nach einem der vorhergehenden Ansprüche,
**dadurch gekennzeichnet, dass**
die geneigte Lage des in einer Fahrtrichtung des Kraftfahrzeugs (1) vor dem Kraftfahrzeug (1) liegenden ersten Fahrbahnbereiches (9) erkannt wird, wobei eine Haupterfassungsrichtung (12) der Abstandssensoreinrichtung (4) entlang einer Fahrzeuglängsachse (L) des Kraftfahrzeugs (1) orientiert ist.

12. Fahrerassistenzsystem (2) für ein Kraftfahrzeug (1) mit einer Abstandsensoreinrichtung (4), einer Drehratensensoreinrichtung (8) und einer Steuereinrichtung (3), welche dazu ausgelegt ist, ein Verfahren nach einem der vorhergehenden Ansprüche durchzuführen.

13. Fahrerassistenzsystem (2) nach Anspruch 12,
**dadurch gekennzeichnet, dass**
die Abstandssensoreinrichtung (4) zumindest einen Ultraschallsensor und/oder zumindest einen Radarsensor und/oder zumindest einen LiDAR-Sensor aufweist.

14. Kraftfahrzeug (1) mit einem Fahrerassistenzsystem (2) nach Anspruch 13.
